**Europäisches Patentamt**

**European Patent Office**

**Office européen des brevets**

(19)

(11) Publication number:

**0 373 152**
**A2**

# EUROPEAN PATENT APPLICATION

(12)

(21) Application number: **90101334.2**

(22) Date of filing: **02.05.86**

(51) Int. Cl.⁵: **F16F 9/44**

(30) Priority: **03.05.85 US 730334**

(43) Date of publication of application:
**13.06.90 Bulletin 90/24**

(60) Publication number of the earlier application in
accordance with Art.76 EPC: **0 222 832**

(84) Designated Contracting States:
**AT BE CH DE FR GB IT LI LU NL SE**

(71) Applicant: **ENERTROLS, INC.**
**38284 Abruzzi Drive**
**Westland, MI 48185(US)**

(72) Inventor: **Heideman, Robert J.**
**34316 Barton**
**Westland, Michigan(US)**
Inventor: **Mitera, Richard T.**
**44288 N. Umberland**
**Canton, Michigan 48187(US)**

(74) Representative: **Schaumburg, Thoenes &**
**Englaender**
**Mauerkircherstrasse 31 Postfach 86 07 48**
**D-8000 München 86(DE)**

(54) **Shock absorber with stop collar.**

(57) The invention relates to a shock absorber assembly for absorbing the energy of a relatively moving object comprising an outer cylinder (42) having an open front end and closed rear end (44), an inner metering cylinder (50) positioned concentrically within said outer cylinder (42) in spaced relation thereto, a plurality of longitudinally spaced holes (92, 94, 96, 98) in said cylinder (50), a piston (54) slideably mounted in said inner cylinder (50) and including a rod passing outwardly through the front end of said outer cylinder (42) and having a pad (64) at its free front end for impact by the relatively moving object and a sleeve (100) slideably surrounding said inner cylinder (50). Said sleeve (100) includes a plurality of annular internal grooves (102, 104, 106, 108) of smooth arcuate cross section corresponding in number and longitudinal spacing to said holes (92, 94, 96, 98) in said inner cylinder (50). Furthermore, said sleeve (100) comprises a hole (110) associated with each groove (102, 104, 106, 108) opening at its outer end in the outer surface of said sleeve (100) and opening at its inner end in the associated groove (102, 104, 106, 108) to coact with that groove (102, 104, 106, 108) and with the associated hole (92, 94, 96, 98) in said inner cylinder (50) to define a metering passage for hydraulic fluid.

Fig-1

Xerox Copy Centre

# SHOCK ABSORBER WITH STOP COLLAR

## Background of the Invention

This invention relates to a shock absorber device for linearly decelerating a machine part by imposing a relatively constant force on the part over the stroke of the device according to the preamble of claim 1.

Shock absorbers which force fluid through a restricted orifice to convert the kinetic energy of a moving part into an increase in the thermal energy of the fluid are commonly used on machines. The smoothest deceleration of the moving part is obtained by absorbers which offer a constant resistive force to the motion over the total duration of the deceleration.

In a typical installation, a machine tool or transfer arm is repetitively moving back and forth between separate operating positions and the movement of the tool or arm as it arrives at each position is cushioned and decelerated by a shock absorber positioned on the tool or arm or on the adjacent supporting structure. Ideally, as the tool or arm is decelerated at each end of its reciprocal movement, the shock absorber acts to exert a constant resistive force against the tool and smoothly decelerates the tool to a stop position in which the piston of the shock absorber has traversed substantially the entire length of the cylinder of the shock absorber so as to take advantage of the entire range of the fluid orifice means typically provided along the cylinder, and the piston comes to a stop just shy of the end of the cylinder so as to avoid destructive bottoming of the piston against the end of the cylinder. Since it is difficult to obtain these ideal deceleration conditions, and since it is further desirable to provide a positive delimiting means to establish the extent of movement of the tool or arm in each direction of reciprocal movement, it is common practice to employ a stop member at each end of the movement of the tool or arm against which the tool or arm comes to rest as the tool arrives at the end of its movement. Ideally positioned, the stops provide proper end limit positions for the tool or arm, avoid bottoming of the piston against the end of the cylinder to preclude damage to the shock absorber, and precisely position the piston end face with respect to the metering orifices adjacent the end of the stroke so as to provide proper deceleration at the end of the stroke. Although the shock absorber manufacturer commonly provides instructions for proper installation of the stop members at each installation site, it is not unusual that the stop members are not properly positioned with repect to the machine tool or transfer arm with the result that the proper end limit positions for the transfer arm are not established, or the piston bottoms against the end wall of the cylinder with consequent damage to the shock absorber, or the end face of the piston ends up in a position within the cylinder such that the proper deceleration is not provided at the end of the stroke.

A shock absorber assembly as mentioned in the preamble of claim 1 is known from US-A-4 174 098. This shock absorber assembly includes an outer cylindrical tube which comprises a front end portion that is slideably mounted in a larger diameter rear portion. The cylindrical parts of the outer tube are fixed together by any suitable means. An inner tube is fixedly mounted in the outer tube in a telescopic, spaced apart relationship. A metering tube is rotatably mounted about the periphery of the inner tube with its inner bore in sliding seating engagement with said periphery. The metering tube is provided with a plurality of longitudinally spaced apart, parallel, transverse angled metering slots which are adapted to be moved over the metering holes or orifices which are formed through the inner tube. Each metering slot is adapted to coact with a separate metering orifice and to be moved across its respective orifice for controlling the outward metering flow of hydraulic fluid during an invert shock absorbing movement of the piston of the shock absorber assembly.

It is the technical problem of the invention to form a shock absorber assembly, the performance and setting of which can be varied.

This technical problem is solved by a shock absorber assembly comprising the features of claim 1.

Further embodiments and advantages of the invention are mentioned in the subclaims.

An embodiment of the invention will now be described with reference to the accompanying drawings.

Figure 1 is a longitudinal cross sectional view of a shock absorber assembly; and

Figure 2 is a view showing details within circle 2 of Figure 1.

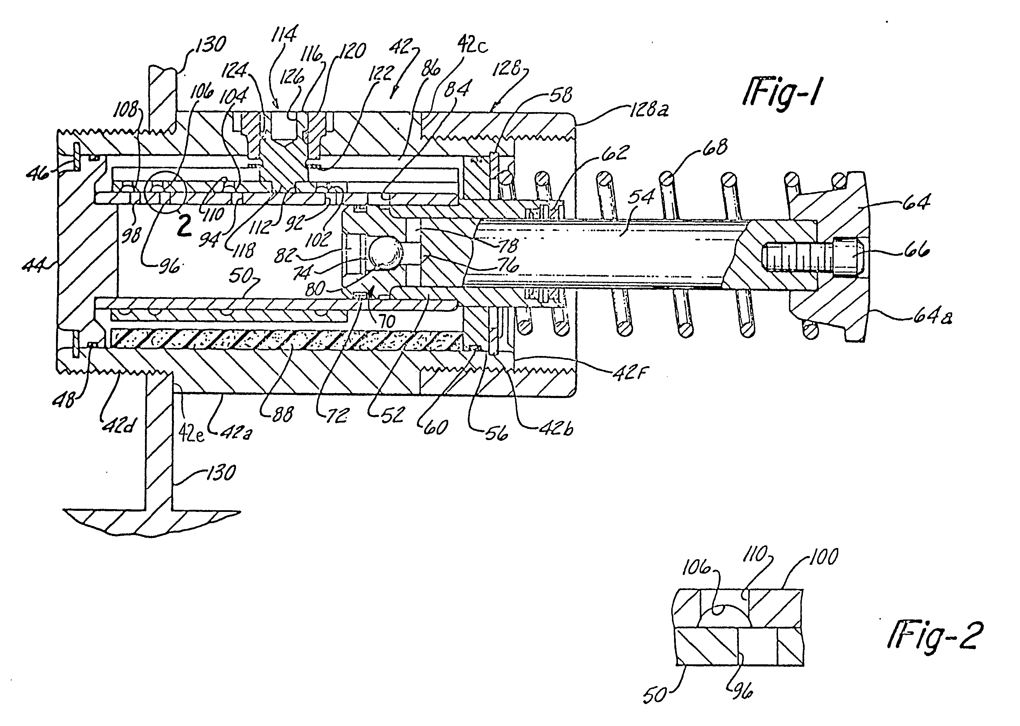

A practical embodiment of the inventional shock absorber assembly is seen in Figure 1. The shock absorber assembly of Figure 1 includes an outer cylinder 42 including a main body, smooth walled cylindrical portion 42a; a front reduced diameter threaded portion 42b forming a shoulder 42c with main body portion 42a; and a rear reduced diameter threaded portion 42d forming a should 42e with main body portion 42a. The rear end of outer cylinder 42 is closed by an end cap 44 secured to the inner wall of cylinder 42 by a retaining ring 46 with an O ring 48 providing a fluid seal therebetween.

A tubular metering cylinder 50 is fixedly supported at its rear end on end cap 44 and projects forwardly into cylinder 42. The outer diameter of metering cylinder 50 is substantially smaller than the inner diameter of outer cylinder 42 so that an annular volume is formed therebetween. The forward inner wall of cylinder 50 engages a cylindrical sleeve bearing 52 adapted to slidingly support an elongated piston rod 54 that projects out of the forward end of the assembly. Bearing 52 is held in place by an annular bushing 56 fixed relative to outer cylinder 42 by a retainer ring 58. An O ring 60 provides a fluid seal between bushing 56 and outer cylinder 42. An annular seal assembly 62 provides sealing engagement between piston rod 54 and the forward inner end of bearing 52 in a known manner.

At its forward end, piston rod 54 carries a button or impact pad 64 secured by a screw 66 threaded into a hole in the end of the piston rod. A spiral spring 68 extends between the rear side of pad 64 and retaining ring 58, thereby acting to return the piston rod to its normal extended position after the impacting part is moved away from the shock absorber. A piston head 70 is formed integrally with the rear end of piston rod 54. A groove on the outer diameter of piston head 70 carries a piston ring 72 bearing against the inner diameter of metering cylinder 50. The rear end of piston head 70 is formed with a central aperture 74 which communicates at its forward end with a central cavity 76. Cavity 76 in turn communicates with a vertically oriented bore 78. The concave surface between the larger aperture 74 and the smaller cavity 76 acts as a seat for a ball check valve 80. A valve retainer is provided rearwardly of the ball by way of a retainer ring 82. When the piston moves rearwardly under the influence of a force exerted on impact pad 64 by a machine part, the cavity 76 is sealed by ball 80 and when the piston moves in the forward direction under the force of return spring 68, a free flow path is established through aperture 74, cavity 76, and bore 78.

Bore 78 communicates with an opening 84 in the forward end of metering cylinder 50. Opening 84 is in further communication with the annular volume 86 between the inner wall of outer cylinder 42 and the outer wall of metering cylinder 50. An accumulator pad 88 substantially fills the entire volume 86. Pad 88 is formed of cellular rubber which may be filled with nitrogen to give it a high degree of resilience and includes an axial slot providing clearance for the adjuster mechanism and metering orifices as will be explained.

Four straight-sided circular holes 92, 94, 96, 98 are formed radially through the wall of metering cylinder 50. The four holes 92, 94, 96, 98 are in longitudinal alignment with one another and their respective spacings are arranged at exponentially decreasing distances in the direction of the rear of metering cylinder 50.

A metering sleeve 100 slideably surrounds the outer diameter of metering cylinder 50 (also see Figure 2). Four internal grooves 102, 104, 106 and 108 are formed on the internal periphery of sleeve 100. The grooves are spaced at exponentially decreasing distances in the direction of the rear of the sleeve and generally correspond to and respectively coact with the four holes 92, 94, 96, 98 in the metering cylinder. Each groove is of semicircular cross sectional configuration and has a diameter slightly greater than the diameter of the cylinder holes 92, 94, 96, 98. Grooves 102, 104, 106, 108 lie in longitudinally spaced parallel planes normal to the axis of the cylinder and sleeve and have a uniform semicircular cross section throughout their circumferential extent. A straight-sided hole 110 is formed in metering sleeve 100 in association with each groove. Each hole 110 opens at its outer end in the outer surface of sleeve 100 and opens at its inner end in the associated groove. Each hole 110 is centered on the associated groove and has a diameter slightly less than the diameter of the associated groove so that the hole intersects the associated groove at a location close to but spaced from the inner periphery of the sleeve. Sleeve 100 further includes a relatively large diameter circular hole 112 positioned between grooves 102 and 104.

An adjuster mechanism seen generally at 114 is provided to vary the extent of overlap between grooves 102, 104, 106, 108 and cylinder holes 92, 94, 96, 98. Adjuster mechanism 114 includes a stub shaft 116 having an off-set cam portion 118 formed at its innermost end. Cam portion 118 is received within hole 112 in sleeve 100. Stub shaft 116 is mounted for rotation by way of a surrounding collar 120 fixed to outer cylinder 42. A retaining ring 122 lies within a circumferential groove in stub shaft 116 above cam portion 118 to restrict upward movement of the shaft. An O ring 124 provides a fluid seal between shaft 116 and collar 120. A socket 126 formed along the vertical center line of shaft 116 is adapted to receive a suitably conforming tool for rotating the shaft. It will be understood that rotation of shaft 116 serves to move sleeve 100 in an orbital pattern with respect to metering cylinder 50 so that the metering orifice size is selectively varied in response to selective rotation of shaft 116 to selectively vary the performance and setting of the shock absorber. Further details of the manner in which the semicircular grooves coact with the metering cylinder to selectively vary the performance of the shock absorber are disclosed in Applicant's co-pending United States Patent Application Serial No. 730,334, filed May 13, 1985.

The shock absorber assembly of Figure 1 further includes a stop collar 128 threaded onto reduced diameter threaded portion 42b. The length of stop collar 128 will vary depending upon whether the shock absorber is intended for front mounting or rear mounting. Specifically, if, as illustrated in Figure 1, the shock absorber assembly is rear mounted by the use of a mounting flange 130 engaging reduced diameter threaded portion 42d, the stop collar 128 will have a length that is slightly greater that the length of reduced diameter outer cylinder portion 42b plus the effective length of the shock absorber assembly (that is, the length between the front annular edge 42f of threaded portion 42b and the front impact face 64a of impact pad 64) minus the stroke of the cylinder. With this arrangement, and as previously described, with the collar threaded onto the front reduced diameter portion 42b and into abutting engagement with shoulder 42c, the distance from the front annular edge 128a of the stop collar to the impact face 64a of the impact pad will be slightly less than the stroke of the shock absorber assembly so that the impacting object will engage the front annular edge 128a of the stop collar just prior to bottoming of the piston 70 against end wall 44.

If front mounting of the shock absorber assembly is intended, and as previously discussed, the length of stop collar 128 would be slightly greater than the length of reduced diameter portion 42b plus the effective length of the shock absorber assembly minus the stroke of the shock absorber assembly and minus the prescribed thickness of the front mounting bracket against which the rear annular edge of the stop collar would abut. In actual practice, the shock absorber assembly would come complete with instructions with respect to mounting and, specifically, would precisely specify the thickness of the front mounting bracket (for example, 3/8 of an inch) which would be employed by the installer to ensure precise positioning of the front annular edge 128a on the stop collar relative to impact surface 64a.

The invention shock absorber assembly will be seen to provide many important advantages. Specifically, the provision of a stop collar that is precisely dimensioned with respect to the other critical dimensions of the shock absorber assembly avoids bottoming of the piston against the end wall of the cylinder with consequent severe damage to the shock absorber assembly; provides a proper and precise definition of the end of the stroke position of the associated transfer arm or machine tool; and precisely positions the piston face at the end of its stroke with respect to the orifices in the metering cylinder so as to provide precise and proper deceleration of the piston as its moves through the critical end portion of its stroke.

Whereas the preferred embodiments of the invention have been illustrated and described with reference to the accompanying drawings, it will be apparent that various changes may be made in the disclosed embodiments without departing from the scope or spirit of the invention.

## Claims

1. A shock absorber assembly for absorbing the energy of a relatively moving object comprising an outer cylinder (42) having an open front end and closed rear end (44), an inner metering cylinder (50) positioned concentrically within said outer cylinder (42) in spaced relation thereto, a plurality of longitudinally spaced holes (92, 94, 96, 98) in said cylinder (50), a piston (54) slideably mounted in said inner cylinder (50) and including a rod passing outwardly through the front end of said outer cylinder (42) and having a pad (64) at its free front end for impact by the relatively moving object and a sleeve (100) slideably surrounding said inner cylinder (50); **characterized in** that said sleeve (100) includes a plurality of annular internal grooves (102, 104, 106, 108) of smooth arcuate cross section corresponding in number and longitudinal spacing to said holes (92, 94, 96, 98) in said inner cylinder (50), and a hole (110) associated with each groove (102, 104, 106, 108) opening at its outer end in the outer surface of said sleeve (100) and opening at its inner end in the associated groove (102, 104, 106, 108) to coact with that groove (102, 104, 106, 108) and with the associated hole (92, 94, 96, 98) in said inner cylinder (50) to define a metering passage for hydraulic fluid.

2. A shock absorber assembly according to claim 1, wherein each of said grooves (102, 104, 106, 108) is generally semi-circular in cross section and each sleeve hole (110) is generally circular and has a diameter generally corresponding to the diameter of said groove (102, 104, 106, 108).

3. A shock absorber assembly according to claim 1 or claim 2, wherein each inner cylinder hole (92, 94, 96, 98) is generally circular and has a diameter less than the diameter of said sleeve holes (110).

4. A shock absorber assembly according to anyone of claims 1 to 3, wherein said assembly further includes an adjustor member (114) mounted for rotation about an adjustor axis generally normal to the lengthwise axis of said shock absorber and including an eccentric cam portion (118) received in a circular adjustor hole (112) in said sleeve (100) and operative in coaction with said adjustor hole (112) and in response to rotation of said adjustor member (114) about said adjustor axis to create simultaneous relative radial and axial movement between said sleeve (100) and said cylinder (42) so that the grooves (102, 104, 106, 108) in said sleeve (100) move in an orbital pattern relative to the holes (92, 94, 96, 98) in said inner cylinder (50) to adjust the flow characteristics of the metering passages.

Fig-1

Fig-2